# EUROPEAN PATENT APPLICATION

(11) **EP 1 732 234 A1**
(43) Date of publication of application: **13.12.2006**
(21) Application number: 05727501.8
(22) Date of filing: 29.03.2005
(51) Int. Cl.: H04B 1/16

(54) **DIGITAL WIRELESS COMMUNICATION APPARATUS**

(30) Priority: 31.03.2004 JP 2004105298
(71) Applicant: Pioneer Corporation, Tokyo 153-8654 (JP)
(72) Inventor: TSUSHIMA, Masahiro, Kawagoe koujou, Pioneer Corp., Kawagoe-shi, Saitama 3508555 (JP)
(74) Representative: Popp, Eugen
(86) International application number: PCT/JP2005/005950
(87) International publication number: WO 2005/096514

(57) **Abstract**

It is an object of the present invention to provide an improved digital radio communication device capable of performing a tuning in response to a change in a reception state so as to ensure an acceptable reception quality.

The digital radio communication device comprises a receiving unit 3 for receiving a radio wave, a position detecting unit 4, and a control unit 5 for tuning the receiving unit 3. Once a reception quality of the receiving unit 3 becomes deteriorated, the control unit 5 determines an area in which the reception quality of the receiving unit 3 becomes deteriorated, in accordance with an output of the position detecting unit 4. Meanwhile, a tuning condition for further improving the reception quality is learned, and a learned tuning condition is taken as a tuning condition for tuning the receiving means when next passing through said area.

## Description

### Technical Field

The present invention relates to a digital radio communication device movable with a mobile body such as a vehicle or the like, particularly to a digital radio communication device capable of performing a tuning to ensure an acceptable reception quality.

### Background Technique

In a field of radio communication technique, a main trend is digital radio communication which has realized a broadband transmission by efficiently utilizing a narrow frequency range and is capable of improving a frequency utilization efficiency, as can be seen in cellular phone, television broadcasting, radio broadcasting or the like. Japanese Unexamined Patent Application Publication No. 2003-273759 has disclosed a receiving device which is installed in a mobile body such as a vehicle or the like to receive a digital television broadcasting.

Such a digital broadcast receiving device installed in a mobile body has a changing reception area which changes with the movement of the mobile body, so that it is usually' equipped with an auto preset function of searching for a receivable broadcasting channel. In an auto preset operation, a reception is performed in accordance with broadcast channel information of each reception area provided as service information from a broadcasting station, and a bit error rate (BER) is measured, thereby determining a receivable broadcast channel in accordance with a result of such measuring.

Patent Document 1: Japanese Unexamined Patent Application Publication No. 2003-273759

### Disclosure of the Invention

### Problem(s) to be Solved by the Invention

As discussed above, the above-mentioned conventional digital broadcast receiving device installed in a mobile body has an auto preset function of searching for a receivable broadcasting channel in response to a change of reception area. However, even within a receivable reception area, once a broadcasting radio wave during a reception becomes weak with a movement of a mobile body or there is a change in a reception state, such as an occurrence of a multipass fading, a deterioration will occur in the quality of sound and image outputted by an audio/video output device.

Moreover, once there is a deterioration in the quality of sound and image, it will be necessary for a user to adjust a volume or equalizer characteristic, as well as an image brightness and a contrast or the like, thus making it difficult to avoid a troublesome tuning operation.

The present invention has been accomplished in view of the above problem and it is an object of the invention to provide an improved digital radio communication device capable of automatically optimizing a tuning in response to a change in a reception state. Means for Solving the Problem

An invention recited in claim 1 is a digital radio communication device comprising: receiving means for receiving a radio wave; position detecting means; and control means for tuning the receiving means. In particular, the control means is provided such that once a reception quality of the receiving means becomes deteriorated, the control means judges a receiving means reception quality deterioration area in accordance with an output of the position detecting means, learns a tuning condition for further improving the reception quality, and takes a learned tuning condition as a tuning condition for tuning the receiving means when next passing through said area.

An invention recited in claim 2 is a digital radio communication device according to claim 1, wherein the control means stores said tuning condition for tuning said receiving means as well as history information in relation to a reception quality of the receiving means. When a reception quality of the receiving means becomes deteriorated, and if a mobile body is passing through said judged area, the control means tunes said receiving means in accordance with said tuning condition, and compares a reception quality obtained by tuning the receivingmeans in accordance with said tuning condition, with a reception quality obtained when last passing through said area, in accordance with said history information. Once a reception quality becomes lower than a reception quality obtained during a last passing, the control means performs an operation to calculate a new tuning condition for further improving a reception quality of said receiving means, performs a learning by updating said tuning condition with said new tuning condition, and takes a tuning condition after the learning as a tuning condition for tuning said receiving means when next passing through said area.

An invention recited in claim 8 is a method of tuning receiving means in a digital radio communication device comprising the receiving means for receiving a radio wave and position detecting means. According to the method, once a reception quality of the receiving means becomes deteriorated, a receiving means reception quality deterioration area is determined in accordance with an output of the position detecting means, while a tuning condition for further improving the reception quality is learned, and a learned tuning condition is taken as a tuning condition for tuning the receiving means when next passing through said area.

An invention recited in claim 9 is a computer program for operating a computer in a digital radio communication device which comprises receiving means for receiving a radio wave, position detecting means, and control means including a computer for tuning the receiving means. According to the computer program, the computer is caused to detect a reception quality of the reception means and once the computer detects that a reception quality of the receiving means has become deteriorated, a receiving means reception quality deterioration area is determined in accordance with an output of the position detecting means, while a tuning condition for further improving the reception quality is learned, and a learned tuning condition is taken as a tuning condition for tuning the receiving means when next passing through said area.

An invention recited in claim 10 is a storage medium storing a computer program for operating a computer in a digital radio communication device which comprises receiving means for receiving a radio wave, position detecting means, and control means including a computer for tuning the receiving means. According to the computer program, the computer is caused to detect a reception quality of the reception means and once the computer detects that a reception quality of the receiving means has become deteriorated, a receiving means reception quality deterioration area is determined in accordance with an output of the position detecting means, while a tuning condition for further improving the reception quality is learned, and a learned tuning condition is taken as a tuning condition for tuning the receiving means when next passing through said area.

### Brief Description of the Drawings

Fig. 1 is a block diagram showing a structure of a digital radio communication device formed according to an embodiment of the present invention.
Fig. 2 is a view explaining a tuning control function of the digital radio communication device shown in Fig. 1.
Fig. 3 is a block diagram showing a structure of a digital radio communication device formed according to an example.
Fig. 4 explains storage contents of a storage unit provided in the digital radio communication device shown in Fig. 3.
Fig. 5 is a flow chart explaining an operation of the digital radio communication device shown in Fig. 3.

### Best Mode of Carrying Out the Invention

Next, description will be given to explain a digital radio communication device formed according to an embodiment of the present invention.

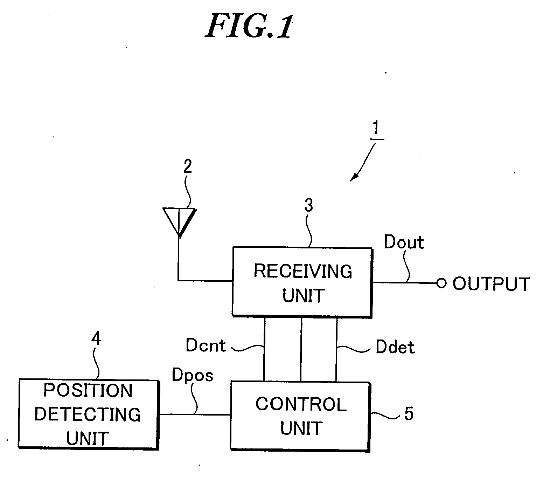

Fig. 1 is a block diagram showing the structure of the digital radio communication device.

As shown in Fig. 1, the digital radio communication device 1 is a radio communication device which can be carried by a user or can be mounted in a mobile body such as a vehicle or the like, and comprises a receiving unit 3 connected with a receiving antenna 2, a position detecting unit 4, and a control unit 5.

The receiving unit 3 comprises an RF amplifier, a frequency converter, a decoder and the like, and performs a frequency conversion on a received signal generated in the receiving antenna 2 in accordance with a local oscillation frequency, thereby generating an intermediate frequency signal (IF signal) consisting of digital data train, thus generating and outputting a demodulation signal Dout by decoding the intermediate frequency signal using the decoder.

Moreover, when the decoder provided in the receiving unit 3 generates the demodulation signal Dout, it also measures a reception sensitivity, a modulation degree, a bit error rate (BER) or the like, and supplies the measured bit error rate and the like to the control unit 5 as measurement data Ddet indicating a reception quality.

The position detecting unit 4 is equipped with a position detecting sensor which detects a current position of the digital radio communication device 1, and supplies the detected position data Dpos to the control unit 5.

The control unit 5 is formed of an electronic circuitry containing a microprocessor (MPU) or a digital signal processor (DSP) capable of performing an operating function and a control function by executing a computer program prepared according to a predetermined algorithm.

Here, the control unit 5 finds a current position of the digital radio communication device 1 in accordance with the position data Dpos fed from the position detecting unit 4, and judges a reception quality of the receiving unit 3 in accordance with the bit error rate or the like supplied as measurement data Ddet. Moreover, apart from specifying a local oscillation frequency for the frequency converter provided in the receiving unit 3, once the control unit 5 judges a reception quality deterioration in accordance with measurement data Ddet, the control unit 5 will perform a tuning control on the receiving unit 3 in accordance with control signal Dcnt so as to improve the reception quality of the receiving unit 3.

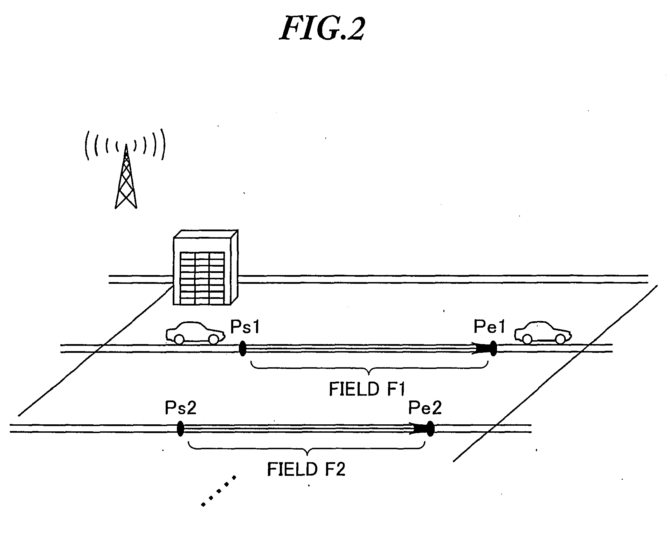

Next, description will be given to explain a tuning function of the control unit 5 with reference to Fig. 2. Here, Fig. 2 shows a movement of a mobile body mounting the digital radio communication device 1, with an area between positions Ps1 and Pe1 as well as an area between positions Ps2 and Pe2 representing reception quality deteriorating areas (hereinafter, referred to as "fields" F1 and F2).

When the digital radio communication device 1 passes through the field F1 together with a mobile body, once the control unit 5 judges a reception quality deterioration in accordance with the measurement data Ddet, the control unit 5 will find an entrance position for entering the filed F1 in accordance with position detection data Dpos outputted from the position detecting unit 4 at the time of the judgment. Then, upon judging that the mobile body has already passed through the field F1 and that the deteriorated reception quality has returned to an acceptable quality, the control unit 5 will find a secession position (for example, position Pe1) for leaving the field F1, in accordance with the position detection data Dpos outputted from the position detecting unit 4 at the time of the judgment.

In this way, the control unit 5 thus judges the field F1 in which the reception quality of the receiving unit 3 deteriorates, by performing the above-discussed processing.

Next, the control unit 5 learns a tuning condition for further improving the reception quality, and stores the leaned tuning condition in a storage unit (not shown) provided in the control unit 5, as a tuning condition for tuning the receiving unit 3 when the mobile body passes through the field F1 next time.

Then, when the mobile body again passes through the field F1 (from the second time onwards), the control unit 5 tunes the receiving unit 3 in accordance with the tuning condition learned last time and stored in the storage unit, and learns a further tuning condition for further improving the reception quality and then stores the same in the storage unit.

In more detail, the control unit 5 stores a tuning condition for tuning the receiving unit 3 and measurement data Ddet outputted from the receiving unit 3 in the storage unit as history information on reception quality.

Then, when the digital radio communication device 1 passes through the field F1 together with a mobile body, once there is a deterioration in the reception quality of the receiving unit 3, the receiving unit 3 will be tuned in accordance with the tuning condition stored in the storage unit.

Furthermore, a reception quality obtained by tuning the receiving unit 3 in accordance with a tuning condition is compared to a reception quality obtained by tuning the receiving unit 3 when first passing through the field F1. In other words, the history information indicating a reception quality and stored in the storage unit is compared to a reception quality obtained by tuning the receiving unit 3 in accordance with a tuning condition. Once it has been judged that the reception quality at this time has become lower, an operation will be performed to find a new tuning condition so as to further improve the reception quality of the receiving unit 3.

Then, a learning is carried out by updating the tuning condition with a new tuning condition, while a tuning condition after learning is stored in the storage unit as a tuning condition for tuning the receiving unit 3 when next passing through the field F1. When next passing through the field F1, the receiving unit 3 is tuned in accordance with the tuning condition learned and stored, while repeating a processing of further learning a tuning condition and storing the same in the storage unit.

Moreover, the digital radio communication device 1 is formed such that even when the mobile body passes through other field such as field F2, the control unit 5 will perform the same processing as performed when passing through the field F1.

In addition, according to the digital radio communication device 1 of the present embodiment, upon passing through the same field, the control unit 5 will perform a learning by updating a tuning condition for tuning the receiving unit 3 during a next passing so as to obtain a better reception quality, thereby optimizing the tuning condition for the receiving unit 3.

Furthermore, when passing through the same field and when a reception quality turns out to be acceptable as a result of tuning the receiving unit 3 in accordance with the tuning condition, if the tuning condition is not updated and thus the reception quality becomes deteriorated, a learning will be performed for updating the tuning condition. For this reason, the control unit 5 will learn the tuning condition and then optimize the same so as to further improve the reception quality. Then, upon tuning the receiving unit 3 in accordance with the tuning condition, it is possible to perform a tuning to obtain an acceptable reception quality without a reception quality deterioration.

Moreover, since the digital radio communication device 1 in moving searches for a reception quality deteriorating field, and then optimizes a tuning condition for improving a reception quality, it is possible to perform a tuning with an extremely high precision to ensure an acceptable reception quality for the receiving unit 3, in response to an actual reception state of a coming radio wave. Meanwhile, it is possible to perform a tuning with an extremely high precision satisfying various areas, irrespective of a reception quality deteriorating field is narrow or large.

Further, the digital radio communication device 1 of the present embodiment, apart from receiving digital television broadcasting and digital radio broadcasting, can also receive Internet information and other digital information transmitted through a radio-transmission route, and tune the receiving unit 3 to obtain an acceptable reception quality. In addition, it is also possible for the digital radio communication device 1 of the present embodiment to be used as a mobile radio communication device such as a cellular phone.

### [Example]

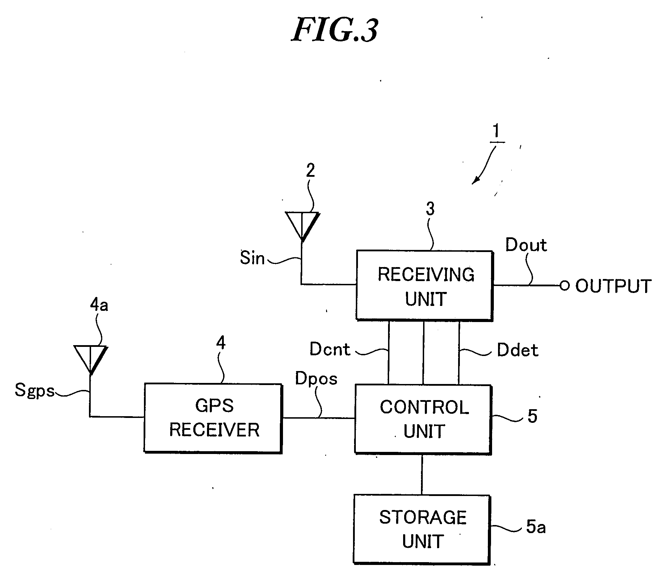

Next, description will be given to explain a more detailed embodiment of the digital radio communication device, with reference to Figs. 3 to 5. Fig. 3 is a block diagram showing a structure of the digital radio communication device of the present embodiment, with the same elements as those in Fig. 1 being represented by the same reference numerals.

In Fig. 3, the digital radio communication device 1 is a digital radio communication device which can be carried by a user or mounted in a mobile body such as a vehicle. Similar to the digital radio communication device shown in Fig. 1, the digital radio communication device 1 shown in Fig. 3 has a receiving unit 3 connected with a reception antenna 2 for receiving a coming radio wave, a GPS receiver 4 serving as a position detecting unit, and a control unit 5.

The receiving unit 3 inputs into itself a reception signal Sin generated in the reception antenna 2, and outputs a demodulation signal Dout.

Namely, the receiving unit 3 comprises: an RF amplifier for amplifying the reception signal Sin, removing and thus outputting unwanted disturbance wave component; a frequency converter for generating an intermediate frequency signal by performing a frequency conversion on the output of the RF amplifier in accordance with a local oscillation frequency; an IF amplifier for amplifying the intermediate frequency signal; an A/D converter for A/D converting the intermediate frequency signal outputted from the IF amplifier so as to form and output an intermediate frequency signal consisting of digital data train; and a decoder for generating and thus outputting a demodulation signal Dout by performing an error correction and demodulation on the intermediate frequency signal consisting of the digital data train.

Then, by supplying the demodulation signal Dout to a driver for driving a speaker or a display (not shown), it is possible to play back audio or video information transmitted hereto by means of the coming radio wave on the speaker or display, thereby supplying the information to a user.

Moreover, when generating the demodulation signal Dout, a reception field intensity, a modulation degree, and a bit error rate (BER) or the like are measured in accordance with the demodulation signal Dout so as to measure a reception quality of the receiving unit 3, with at least one of the measurement results being supplied to the control unit 5 as measurement data Ddet.

The GPS receiver 4 receives, by means of a reception antenna 4a, a GPS radio wave coming from a GPS (Global Positioning System) satellite, and detects a current position of the digital radio communication device 1 in accordance with position data Dpos and time information contained in the reception signal Sgps, and supplies the detected position data Dpos to the control unit 5.

The control unit 5 is formed of an electronic circuitry including a microprocessor (MPU), a digital signal processor (DSP) or the like which performs an operating function and a control function by executing a computer program prepared according to a predetermined algorithm.

Further, the control unit 5 finds a current position of the digital radio communication device 1 in accordance with the position data Dpos outputted from the GPS receiver 4. Moreover, a bit error rate supplied with the measurement data Ddet is compared to a predetermined criterion (so-called threshold) to judge whether a reception quality of the receiving unit 3 is acceptable or not. In addition, a local oscillation frequency is specified with respect to the above-mentioned frequency converter provided in the receiving unit 3. Besides, a control signal Dcnt is supplied to the receiving unit 3 so as to perform a tuning control on the foregoing RF amplifier, the frequency converter, the IF amplifier, the A/D converter, and the decoder provided in the receiving unit 3.

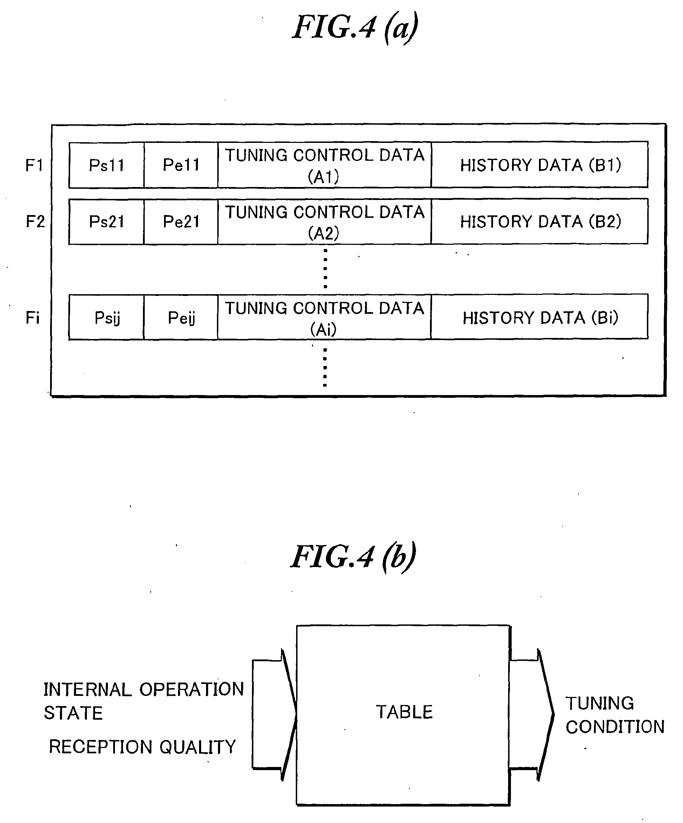

Furthermore, a storage unit 5a is connected to the control unit 5. As will be described in detail later, the storage unit 5a has a first storing area and a second storing area. The first storing area is a so-called operating area for storing tuning control data or the like indicating various tuning conditions for tuning various essential elements provided in the receiving unit 3, as shown in Fig. 4(a). The second storing area has stored therein a table in the form of look-up table correlatively containing information indicating various tuning conditions for improving the reception quality of the receiving unit 3, with respect to information (gain of RF amplifier, gain of IF amplifier, local oscillation frequency) on internal operation states of various essential elements provided in the receiving unit 3, as well as information on the reception quality of the receiving unit (such as bit error rate or the like), as shown in Fig. 4(b).

On the other hand, the storage unit 5a does not absolutely have to be fixedly connected to the control unit 5, but can be a semiconductor memory detachably connected to a slot formed in the control unit 5. Moreover, it is also possible to connect a recording/playback device such as hard disk drive, a CD player, and a DVD player through a connector which is provided in the control unit 5 and formed in accordance with the USB standard, so that the control unit 5 can store the foregoing tuning control data or the like in a storage medium such as HDD, CD, DVD or the like loaded in the recording/playback device, or store a table in the storage medium.

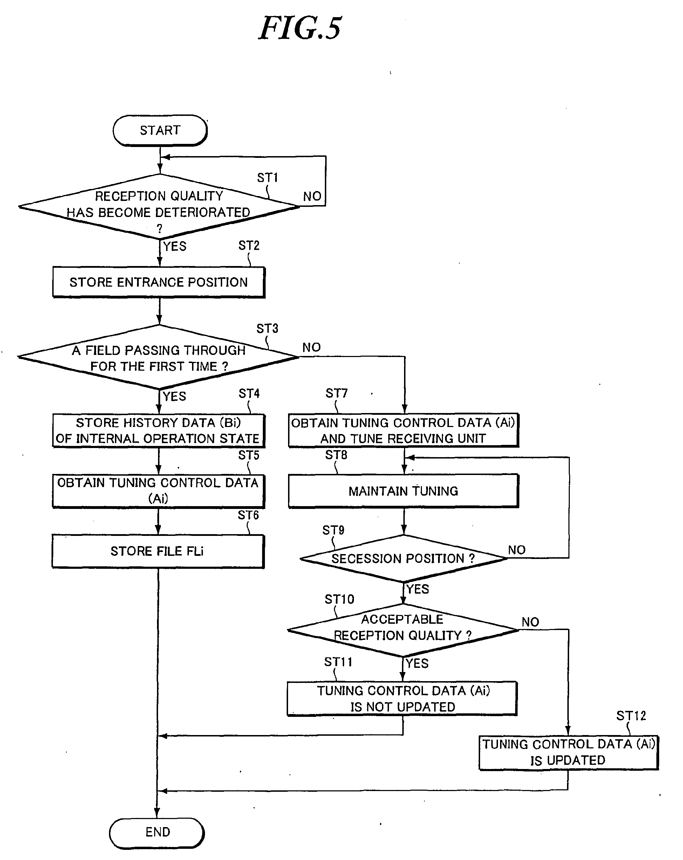

Next, description will be given to explain an operation of the digital radio communication device 1 having the above-discussed structure, with reference to a flow chart shown in Fig. 5. However, such a description will be based on an example in which the digital radio communication device 1 moves with a mobile body such as a vehicle.

Here, for an easy explanation, each respective fields F1 and F2 or the like are represented by Fields Fi (i is an arbitrary natural number), while positions Ps11, Pe11 and Ps21 and Pe21 of boundaries of the respective fields F1 and F2 or the like are taken as positions Psij and Peij (j is an arbitrary natural number indicating the number of times the communication device has passed through Field Fi).

At first, upon starting an operation of the digital radio communication device 1, the control unit 5 will investigate the measurement data Ddet one by one at step ST1 so as to judge whether the reception quality has deteriorated. Once it is judged that the reception quality has deteriorated, the process proceeds to step ST2.

At step ST2, the control unit 5 finds a current position at which a reception quality has deteriorated, in accordance with the position detection data Dpos outputted from the GPS receiver 4, and stores the position detection data Dpos in the first storing area of the storage unit 5a. When a mobile body has arrived at an entrance position Ps11 of the field F1, the control unit 5 will store the position detection data Dpos indicating the entrance position Ps11 in the first storing area.

Next, at step ST3, the control unit 5 searches the first storing area in the storage unit 5a, and investigates whether the position data indicating a position which is the same as the foregoing entrance position Ps11 or within a predetermined allowable range has been stored in the first storing area. If yes, it is judged that the communication device passes through the field F1 for the first time. If not, it will be judged that the communication device has passed the field F1 twice or more.

Namely, as shown in Fig. 4(a), whenever the communication device passes through a field Fi for the first time, the control unit 5 will store, in a file FLi, a tuning control data (Ai) indicating an entrance position Psij, a secession position Peij, and a tuning condition, as well as historical data (Bi) indicating a reception quality, thereby storing these data in the first storing area of the storage unit 5a. Further, the control unit 5 searches for the positions Psij and Peij stored in these files FLi, thereby judging whether the field is the one through which communication device passes for the first time.

Next, upon judging that the communication device passes through the field for the first time, the control unit 5 will investigate the internal operation states of various elements of the receiving unit 3, and stores the investigated internal operation states as history data (Bi) in the first storing area of the storage unit 5a . Namely, when the mobile body passes through the field F1, history data (B1) will be stored.

Next, at step ST5, the control unit 5 searches for a table stored in the second storing area of the storage unit 5a, in accordance with the internal operation states of various elements of the receiving unit 3 as well as a reception quality, so as to obtain a tuning control data (Ai) for tuning each element of the receiving unit 3 when next passing through the same field, and storing the same in the first storing area of the storage unit 5a.

Namely, the control unit 5 searches for a table as a look-up table which is stored in the second storing area of the storage unit 5a, so as to obtain the tuning control data (Ai) outputted from the look-up table, thereby performing a processing which is the same as an operation for calculating the tuning control data (Ai).

Next, at step ST6, the control unit 5 judges whether a deteriorated reception quality has been improved into an acceptable reception quality, in accordance with the measurement data Ddet. If yes, the control unit 5 will find a position into which the mobile body has seceded from the foregoing field, in accordance with the position detection data Dpos outputted from the GPS receiver 4 at that time. Namely, for example, the control unit 5 will find a secession position Pe11 of the field F1 shown in Fig. 2.

Then, the tuning control data (Ai), the history data (Bi), and the data of entrance position Ssij and the secession position Peij, all stored in the first storing area of the storage unit 5a, are recorded in the files Fi so as to be stored in the first storing area of the storage unit 5a.

That is, when a mobile body has passed through the field F1 shown in Fig. 2, data of position Ps11 and position Pe11, the tuning control data (A1), and the history data (B1) will be stored in an identifiable file F1, so as to be stored in the first storing area of the storage unit 5a.

In this way, when a mobile body passes through a field Fi for the first time, the control unit 5 will store a file FLi corresponding to the field Fi in the first storing area of the storage unit 5a, without performing a tuning control on the receiving unit 3. Then, the process beginning with the step ST1 is started again.

Next, the control unit 5 performs the processing of steps ST1 to ST3. At step ST3, once it is judged that the mobile body passes through a field not for the first time, the process will proceed to step ST7.

At step ST7, the control unit 5 obtains tuning control data (Ai) from the file FLi corresponding to the field Fi through which a mobile body is passing, thereby tuning various elements of the receiving unit 3 in accordance with the tuning condition shown in the tuning control data (Ai). For example, when the mobile body is passing through the field F1, the control unit 5 will tune various elements of the receiving unit 3 in accordance with the tuning control data (A1) stored in the file FL1.

Next, at steps ST8 and ST9, the tuning condition with respect to various elements of the receiving unit 3. is maintained as such without any change until the mobile body secedes from the field Fi through which it is passing.

Namely, at step ST8 the control unit 5 maintains the tuning condition with respect to various elements of the receiving unit 3 without any change until at step ST9 the control unit 5 judges that a deteriorated reception quality has returned to an acceptable reception quality, in accordance with the measurement data Ddet. Furthermore, the reception quality of the receiving unit 3 is stored by storing the measurement data Ddet in the storage unit 5a.

Then, at step ST9, once the control unit 5 judges that a deteriorated reception quality has returned to an acceptable reception quality, the control unit 5 will find a secession position in accordance with the position detection data Dpos outputted at that time from the GPS receiver 4. Then, the process proceeds to step ST10.

At step ST10, the control unit 5 compares the measurement data Ddet, i.e., a reception quality of the receiving unit 3 which was stored in the storage unit 5a at step ST9, with the history data (Bi) stored in the first storing area of the storage unit 5a when the mobile body passed through the same field Fi last time, thereby judging whether a reception quality obtained by tuning at this time is better than a reception quality obtained by tuning at the last time.

Namely, upon passing through the field F1, a reception quality obtained by tuning at this time is compared to the history data (Bi) stored in the file FL1.

Then, if a reception quality obtained by tuning at this time is better than a reception quality obtained by tuning at the last time when passing through, the process will proceed to step ST11. On the other hand, if a reception quality obtained by tuning at this time is worse than a reception quality obtained by tuning at the last time when passing through, the process will proceed to step ST12.

At step ST11, the control unit 5 stores in a file FLi the tuning control data (Ai) indicating a tuning condition maintained at the step ST8. Namely, when a reception quality obtained by tuning at this time is acceptable, the tuning control data (Ai) will not be updated. For example, when a mobile body has passed through the field F1, if a reception quality obtained by tuning at this time is acceptable, there would be no updating operation on the tuning control data (A1). Then, the data of the position Ps11 and the position Pe11, as well as history data (B1) indicating a reception quality obtained by tuning at this time are stored in the file F1 and then stored in the first region of the storage unit 5a, thereby starting the processing beginning with step ST1.

On the other hand, after proceeding to step S12, the control unit 5 searches for a table stored in the second storing area of the storage unit 5a, in accordance with internal operation states of various elements of the receiving unit 3 as well as a reception quality thereof, thereby obtaining the tuning control data (Ai) for tuning various elements of the receiving unit 3 when next passing through the same field, thus storing the data in a file FLi and thus storing the same in the first storing area of the storage unit 5a. Further, the data of positions Psij, Peij and the history data (Bi) indicating a reception quality obtained by tuning at this time are stored in the file Fli, so as to be stored in the first storing area of the storage unit 5a. Subsequently, the processing beginning with step ST1 is started.

As described above, according to the digital radio communication device 1 of the present embodiment, upon repeatedly passing through the same field, the control unit 5 will perform a processing including steps ST7 to ST12 shown in Fig. 5, and also perform a learning by updating the tuning control data indicating a tuning condition for tuning the receiving unit 3 when next passing through the same field, thereby obtaining a batter reception quality and thus making it possible to optimize a tuning condition with respect to the receiving unit 3.

Furthermore, learning is performed in a manner such that when the mobile body passes through the same field and a reception quality has become acceptable as a result of tuning the receiving unit 3 in accordance with the tuning control data, the tuning control data will not be updated. On the other hand, if the reception quality has deteriorated, the tuning control data will be updated. As a result, the control unit 5 can learn and then optimize the tuning control data to further improve the reception quality. Upon tuning the receiving unit 3 in accordance with the tuning control data, it is possible to perform a tuning to obtain a batter reception quality without any unfavorable influence.

Moreover, the digital radio communication device 1 operates of its own accord to search for a field in which a reception quality becomes deteriorated in moving, and optimize the tuning control data to further improve the reception quality. Therefore, it is possible to perform an extremely highly accurate tuning to ensure an acceptable reception quality of the receiving unit 3, corresponding to an actual reception state of a coming radio wave. Meanwhile, it is possible to perform an extremely highly accurate tuning in each respective area, irrespective of whether a field in which a reception quality becomes deteriorated is narrow or wide.

Further, the digital radio communication device 1 of the present embodiment makes it possible to tune the receiving unit 3 in a manner such that the device 1 can receive not only a digital television broadcasting or a digital radio broadcasting, but also an Internet information and other digital information transmitted through a radio transmission route, thereby making it possible to ensure an acceptable reception quality. In addition, the digital radio communication device 1 of the present embodiment can also be used as a mobile radio communication device such as a cellular phone.

In the above description of the above embodiment, when a mobile body passes through the same field twice or more, it is judged whether a reception quality of this time is acceptable, in accordance with the measurement data Ddet such as bit error rate, which is a necessary condition for the control unit 5 to update the tuning control data. However, the present invention is by no means to be limited to the case where the foregoing judgment is performed in accordance with the quality of the demodulation signal Dout.

For example, changes of positions Psij and Peij detected when passing through the same field can be stored as history information. When an interval area (i.e., field) between an entrance position and a secession position detected in passing through the same field has become narrower than the foregoing history information, it can be judged that an acceptable reception quality has been acquired, thereby using it as a judgment condition to determine whether it is necessary to update a tuning control data.

Moreover, although the above-description has been given to explain the system in which files are stored in the storage unit 5a contained in the control unit 5, it is also possible to provide a database server on a base station side such as a broadcasting station and to store the files in the database.

Namely, a transmission unit which performs a radio communication interactively with a base station side is provided in the digital radio communication device 1, and the files are transmitted through the transmission unit to the foregoing server and then stored therein. When a mobile body passes through the same field and once the control unit 5 judges that a reception quality has deteriorated, the position data Dpos outputted from the position detecting unit 4 will be transmitted to the database server, thereby downloading a file corresponding to a field through which the mobile body is passing, by way of the receiving unit 3.

Then, the control unit 5 tunes the receiving unit 3 in accordance with the tuning control data stored in the downloaded file, stores in the file the tuning control data updated by performing the above-mentioned learning, returns the data to the database through the transmission unit and stores the same there.

In this way, once a file is stored in a database server formed on a base station side, it is allowed to greatly reduce a storage capacity of the storage unit of the control unit 5.

Moreover, a plurality of users each owning a digital radio communication device 1 are allowed to share and use a file stored in the database server.

In this way, if a database server is shared by a plurality of users, the digital radio communication devices 1 owned by the respective users can mutually learn and thus optimize tuning control data. Moreover, although one user has only a limited movable area, if a plurality of users share a database server, it is possible to collect in the database server the tuning control data for improving a reception quality in a relatively large area, thereby making it possible to use the digital radio communication device 1 of each user, thus providing an improved convenience.

Moreover, although the present embodiment uses the GPS receiver 5 as a position detecting unit, it is also possible for the position detecting unit to be formed of other device.

For example, it is possible to provide a so-called self-propelled position detecting device which comprises a direction sensor for detecting a traveling direction of a vehicle or the like and a distance sensor for measuring a moved distance, and performs a geometrical operation on each sensor output so as to detect a current position of the vehicle. Besides, it is also possible to provide a position detecting device which detects the directions and propagation delay times of a plurality of coming radio waves from a plurality of mobile station antennas, and performs operations on the detection results so as to detect the current position.

Moreover, it is also possible to record a computer program having the tuning control function of the control unit 5 as explained above in a storage medium such as a CD, a DVD and a semiconductor memory. Then, such a storage medium is loaded in a CD player or a DVD player connected with the control unit 5 so as to install the computer program in the control unit 5, thereby causing the microprocessor (MPU) forming the control unit 5 to execute the computer program.

## Claims

1. A digital radio communication device comprising:
receiving means for receiving a radio wave;
position detecting means; and
control means for tuning the receiving means,
wherein the control means is provided such that once a reception quality of the receiving means becomes deteriorated, the control means judges a receiving means reception quality deterioration area in accordance with an output of the position detecting means, learns a tuning condition for further improving the reception quality, and takes a learned tuning condition as a tuning condition for tuning the receiving means when next passing through said area.

2. The digital radio communication device according to claim 1, wherein the control means stores said tuning condition for tuning said receiving means as well as history information in relation to a reception quality of the receiving means,
wherein once a reception quality of the receiving means becomes deteriorated, and if a mobile body is passing through said judged area, the control means tunes said receiving means in accordance with said tuning condition, and compares a reception quality obtained by tuning the receiving means in accordance with said tuning condition, with a reception quality obtained when last passing through said area, in accordance with said history information, wherein once a reception quality becomes lower than a reception quality obtained during a last passing, the control means performs an operation to calculate a new tuning condition for further improving a reception quality of said receiving means, performs a learning by updating said tuning condition with said new tuning condition, and takes a tuning condition after the learning as a tuning condition for tuning said receiving means when next passing through said area.

3. The digital radio communication device according to claim 1 or 2, wherein the control means judges a reception quality of the receiving means in accordance with a bit error rate outputted from said receiving means.

4. The digital radio communication device according to claim 1, wherein the position detecting means is a GPS receiver.

5. The digital radio communication device according to claim 1, wherein the control means has a table for outputting a tuning condition with respect to said receiving means upon receiving internal operation state information and reception quality information of the receiving means, and takes an output from said table as a new tuning condition for further improving the reception quality of said receiving means.

6. The digital radio communication device according to claim 1, wherein the control means has storage means for storing a tuning condition for tuning said receiving means, history information relating to the reception quality of the receiving means, and position information outputted from the position detecting means when the reception quality of the receiving means has become deteriorated.

7. The digital radio communication device according to claim 1,
wherein the control means stores, in a server on a broadcasting station side, a tuning condition for tuning said receiving means and history information relating to a reception quality of the receiving means, and further stores position information outputted from the position detecting means when the reception quality of the receiving means has become deteriorated,
wherein once a reception quality of the receiving means has become deteriorated, the control means operates to download said tuning condition, history information and position information stored in the server on said broadcasting station side.

8. A method of tuning receiving means in a digital radio communication device comprising the receiving means for receiving a radio wave and position detecting means,
wherein once a reception quality of the receiving means becomes deteriorated, a receiving means reception quality deterioration area is determined in accordance with an output of the position detecting means, while a tuning condition for further improving the reception quality is learned, and a learned tuning condition is taken as a tuning condition for tuning the receiving means when next passing through said area.

9. A computer program for operating a computer in a digital radio communication device which comprises receiving means for receiving a radio wave, position detecting means, and control means including a computer for tuning the receiving means,
wherein the computer is caused to detect a reception quality of the reception means and once the computer detects that a reception quality of the receiving means has become deteriorated, a receiving means reception quality deterioration area is determined in accordance with an output of the position detecting means, while a tuning condition for further improving the reception quality is learned, and a learned tuning condition is taken as a tuning condition for tuning the receiving means when next passing through said area.

10. A storage medium storing a computer program for operating a computer in a digital radio communication device which comprises receiving means for receiving a radio wave, position detecting means, and control means including a computer for tuning the receiving means,
wherein the computer is caused to detect a reception quality of the reception means and once the computer detects that a reception quality of the receiving means has become deteriorated, a receiving means reception quality deterioration area is determined in accordance with an output of the position detecting means, while a tuning condition for further improving the reception quality is learned, and a learned tuning condition is taken as a tuning condition for tuning the receiving means when next passing through said area.
